# EUROPEAN PATENT APPLICATION

(11) **EP 4 135 352 A1**
(43) Date of publication of application: **15.02.2023**
(21) Application number: 21190795.1
(22) Date of filing: 11.08.2021
(51) Int. Cl.: H04W 4/02

(54) **LOCALIZING A CAMERA-EQUIPPED DEVICE USING A CAPTURED VISUAL IMAGE**

(71) Applicant: Nokia Technologies Oy, 02610 Espoo (FI)
(72) Inventor: SÖRÖS, Gábor, 1115 Budapest (HU); FARKAS, Lóránt, 2310 Szigetszentmiklós (HU); VARGA, Krisztián, 1158 Budapest (HU)
(74) Representative: Nokia EPO representatives

(57) **Abstract**

An apparatus comprising:
means for enabling communication between a wireless access point to a network and a camera-equipped wireless client device; and
means for enabling determination of a particular point of view that corresponds to a visual image captured by the camera-equipped wireless client device, to localize the camera-equipped wireless client device, within a physical area covered, for wireless access, by the wireless access point,
wherein the determination uses data corresponding to visual features associated with the physical area covered, for wireless access, by the wireless access point.

## Description

### TECHNOLOGICAL FIELD

Embodiments of the present disclosure relate to localizing a camera-equipped device using a captured visual image.

### BACKGROUND

Computer vision enables processing of an image of a real-world location captured from a particular point of view (a particular location and a particular orientation) that determines the particular point of view from which the image was captured. This determination of the point of view is often called localizing or localization.

The process determines a particular point of view, within a three-dimensional map of visual features, that corresponds to a collection of visual features, obtained from a visual image captured by a device, to localize the device. The three-dimensional map of visual features can take many different forms and can, for example, be encoded within a trained neural network. However, irrespective of form a three-dimensional map of visual features enables recognition of three-dimensional distributions of visual features from different perspectives.

A putative point of view within the three-dimensional map of visual features, is associated, through a projective geometry transformation, with a putative 2D image of the three-dimensional arrangement of real-world visual features defined by the three-dimensional map of visual features. The process searches through putative points of view to find a putative 2D image that matches the collection of visual features obtained from the visual image captured by the device. The point of view associated with the best-matching putative 2D image is the most likely point of view of the device when it was capturing the visual image.

Thus, given a three-dimensional map of visual features and a 2D image of visual features from an unknown point of view, there is a transformation that determines the point of view at which a putative 2D image of the visual features of the three-dimensional map, generated for a certain set of camera parameters (zoom, distortion etc), from a putative point of view matches the actual 2D image of visual features.

There are currently many different approaches to the above-described process that use computer vision to determine a point of view and localize a device.

The cost of these processes can be high because the search of the three-dimensional map of visual features is process-intensive.

There can be advantages to using a sparse three-dimensional map of visual features as it requires less memory and has fewer visual features to be matched.

It would be desirable to further or alternatively reduce the cost of these processes.

### BRIEF SUMMARY

According to various, but not necessarily all, embodiments there is provided
an apparatus comprising:
means for enabling communication between a wireless access point to a network and a camera-equipped wireless client device;
means for enabling determination of a particular point of view that corresponds to a visual image captured by the camera-equipped wireless client device, to localize the camera-equipped wireless client device, within a physical area covered, for wireless access, by the wireless access point,
wherein the determination uses data corresponding to visual features associated with the physical area covered, for wireless access, by the wireless access point.

In some but not necessarily all examples, the apparatus comprises:
means for enabling determination of a particular point of view within a local three-dimensional map of visual features, that corresponds to a collection of visual features, obtained from a visual image captured by the camera-equipped wireless client device, to localize the camera-equipped wireless client device, within a physical area covered, for wireless access, by the wireless access point,
wherein the local, three-dimensional map of visual features is a map associated with a physical area covered, for wireless access, by the wireless access point.

In some but not necessarily all examples, the apparatus comprises:
the wireless access point to the network, wherein the wireless access point is configured to communicate wirelessly with one or more camera-equipped wireless client devices; and comprises means for determining a particular point of view that corresponds to a visual image captured by a camera-equipped wireless client device, to localize the camera-equipped wireless client device, within the physical area covered, for wireless access, by the wireless access point, wherein the determination uses data corresponding to local, three-dimensional visual features associated with a physical area covered, for wireless access, by the wireless access point.

In some but not necessarily all examples, the apparatus comprises:
a memory storing one or more three dimensional maps of visual features, wherein the one or more three-dimensional maps of visual features are local maps associated with one or more physical areas covered, for wireless access, by the wireless access point; and
means for enabling a search of the one or more local, three dimensional maps of visual features to find a collection of visual features observed from a particular point of view within a particular local map that transform to a collection of visual features, obtained from a visual image captured by a camera-equipped wireless client device, to localize the camera-equipped wireless client device, within the physical area covered for wireless access by the wireless access point and associated with the particular local map, in dependence upon the particular point of view within the particular map.

In some but not necessarily all examples, the apparatus is configured to reduce a search space used by the search to find a collection of visual features observed from a particular point of view within a particular map that correspond to a collection of visual features, obtained from a visual image captured by a camera-equipped wireless client device, wherein the reduction of the search space is based upon one or more non-visual parameters that vary with location and/or orientation of the camera-equipped wireless client device.

In some but not necessarily all examples, location-dependent access to the network via the wireless access point by the camera-equipped wireless client device automatically grants access, at the apparatus, to the local, three dimensional map of visual features for localizing the camera-equipped wireless client device, wherein location-dependent access to the network via the wireless access point requires physical presence of the camera-equipped wireless client device within the physical area covered, for wireless access, by the wireless access point.

In some but not necessarily all examples, the apparatus is configured, to delegate to another apparatus the task of determining a particular point of view within a local three-dimensional map of visual features, that corresponds to a collection of visual features, obtained from the visual image captured by the camera-equipped wireless client device, to localize the camera-equipped wireless client device, within a physical area covered, for wireless access, by another wireless access point, wherein the local, three-dimensional map of visual features is a map associated with a physical area covered, for wireless access, by another wireless access point.

In some but not necessarily all examples, the another apparatus comprises the another wireless access point.

In some but not necessarily all examples, the apparatus comprises: means for discovering the another apparatus using a discovery process based on one or more of:
(i) the another apparatus is a nearest neighbor to the apparatus;
(ii) the apparatus stores at least one three-dimensional map of visual features that at least partially overlaps at least one three-dimensional map of visual features stored at the another apparatus:
(iii) the another apparatus has at least one three-dimensional map of visual features that has been formed by stitching together three-dimensional maps of visual features obtained from other apparatuses:
(iv) the another apparatus has a wireless access point range that is larger than and that at least partially includes a wireless access point range of the apparatus;
(v) the another apparatus has a larger database of three-dimensional maps of visual features than the apparatus;
(vi) the another apparatus is an expected nearest apparatus based on predicted movement of the camera-equipped wireless client device.

In some but not necessarily all examples, the apparatus is configured to delegate to another access point the task of determining a particular point of view within a local three-dimensional map of visual features, that corresponds to a collection of visual features, obtained from the visual image captured by the camera-equipped wireless client device, to localize the camera-equipped wireless client device, within a physical area covered, for wireless access, by the another wireless access point, wherein the local, three-dimensional map of visual features is a map associated with a physical area covered, for wireless access, by the another wireless access point.

In some but not necessarily all examples, the wireless access point and the another wireless access point use different wireless access protocols and/or cover different physical areas.

In some but not necessarily all examples, delegation occurs, if localizing the camera-equipped wireless client device based on the local three-dimensional map associated with the physical area covered for wireless access by the wireless access point is unsuccessful, or wherein delegation occurs in dependence upon movement of the camera-equipped wireless client device wherein the another wireless access point is selected based on a current or expected future location of the camera-equipped wireless client device and the physical area covered, for wireless access, by the selected wireless access point determines the local, three-dimensional map of visual features used for the delegated task.

In some but not necessarily all examples, a system comprises the apparatus, a server, and one or more additional apparatus each additional apparatus comprising: an additional wireless access point configured to communicate wirelessly with one or more camera-equipped wireless client devices; and means for determining a particular point of view within a local three-dimensional map of visual features, that corresponds to a collection of visual features, obtained from a visual image captured by a camera-equipped wireless client device, to localize the camera-equipped wireless client device, within the physical area covered, for wireless access, by the additional wireless access point, wherein the local, three-dimensional map of visual features is a map associated with a physical area covered, for wireless access, by the additional wireless access point.

In some but not necessarily all examples, in the system, the apparatus is configured, if localizing the camera-equipped wireless client device based on the local three-dimensional map associated with the physical area covered for wireless access by the wireless access point is unsuccessful, to delegate to another apparatus in a peer-to-peer network the task of determining a particular point of view within a local three-dimensional map of visual features, that corresponds to a collection of visual features, obtained from the visual image captured by the camera-equipped wireless client device, to localize the camera-equipped wireless client device, within a physical area covered, for wireless access, by a wireless access point of the another apparatus, wherein the local, three-dimensional map of visual features is a map associated with a physical area covered, for wireless access, by the wireless access point of the another apparatus.

In some but not necessarily all examples, the apparatus is configured as the camera-equipped wireless client device.

According to various, but not necessarily all, embodiments there is provided a computer program that, when run on a computer, performs:
enabling communication between a wireless access point to a network and a camera-equipped wireless client device; and
enabling determination of a particular point of view that corresponds to a visual image captured by the camera-equipped wireless client device, to localize the camera-equipped wireless client device, within a physical area covered, for wireless access, by the wireless access point,
wherein the determination uses data corresponding to visual features associated with the physical area covered, for wireless access, by the wireless access point.

According to various, but not necessarily all, embodiments there is provided a method comprising:
enabling communication between a wireless access point to a network and a camera-equipped wireless client device;
enabling determination of a particular point of view that corresponds to a visual image captured by the camera-equipped wireless client device, to localize the camera-equipped wireless client device, within a physical area covered, for wireless access, within a coverage of the wireless access point,
wherein the determination uses data corresponding to visual features associated with the physical area covered, for wireless access, via the wireless access point.

According to various, but not necessarily all, embodiments there is provided an apparatus comprising:
means for enabling communication between a wireless access point to a network and a camera-equipped wireless client device;
means for enabling determination of a particular point of view within a local three-dimensional map of visual features, that corresponds to a collection of visual features, obtained from a visual image captured by the camera-equipped wireless client device, to localize the camera-equipped wireless client device, within a physical region covered, for wireless access, by the wireless access point,
wherein the local, three-dimensional map of visual features is a map associated with a physical region covered, for wireless access, by the wireless access point.

According to various, but not necessarily all, embodiments there is provided an apparatus comprising:
a wireless access point to a network configured to communicate wirelessly with one or more camera-equipped wireless client devices;
a memory storing information dependent upon one or more local, three-dimensional maps of visual features, wherein the one or more local, three-dimensional maps of visual features are local maps associated with one or more physical regions covered, for wireless access, by the wireless access point;
means for determining a particular point of view within a particular local map that corresponds to a collection of visual features, to localize a camera-equipped wireless client device, within the physical region covered, for wireless access, by the wireless access point and associated with the particular local map, wherein the collection of visual features is obtained from a visual image captured by the camera-equipped wireless client device,

According to various, but not necessarily all, embodiments there is provided an apparatus comprising:
a wireless access point to a network configured to communicate wirelessly with one or more camera-equipped wireless client devices;
a memory storing one or more local, three-dimensional maps of visual features,
wherein the one or more, local three-dimensional maps of visual features are local maps associated with one or more physical regions covered, for wireless access, by the wireless access point;
means for enabling a search of the one or more local, three-dimensional maps of visual features to find a collection of visual features observed from a particular point of view within a particular local map that correspond to a collection of visual features, obtained from a visual image captured by a camera-equipped wireless client device, to localize the camera-equipped wireless client device, within the physical region covered for wireless access by the wireless access point and associated with the particular local map, in dependence upon the particular point of view within the particular map.

According to various, but not necessarily all, embodiments there is provided an apparatus comprising:
means for enabling communication between a wireless access point to a network and a camera-equipped wireless client device;
means for enabling determination of a particular point of view within a local three-dimensional map of visual features, that corresponds to a collection of visual features, obtained from a visual image captured by the camera-equipped wireless client device, to localize the camera-equipped wireless client device, within a physical region covered, for wireless access, within a coverage of the wireless access point, wherein the local, three-dimensional map of visual features is a map associated with a physical region covered, for wireless access, via the wireless access point.

According to various, but not necessarily all, embodiments there is provided an apparatus comprising:
means for enabling communication between an access point to a network and a camera-equipped device;
means for enabling determination of a particular point of view within a local three-dimensional map of visual features, that corresponds to a collection of visual features, obtained from a visual image captured by the camera-equipped device, to localize the camera-equipped device, within a physical area covered, for access, by the access point,
wherein the local, three-dimensional map of visual features is a map associated with a physical area covered, for access, by the access point.
The camera-equipped device can, for example be a camera-equipped wireless client device and the access point can be a wireless access point. The camera-equipped device can, for example be a camera-equipped wired client device and the access point can be an access point to which the camera-equipped client device physically connects. The camera-equipped client device can, for example be a mobile camera-equipped device or a movable device.

According to various, but not necessarily all, embodiments there is provided an apparatus comprising:
means for enabling communication between a wireless access point to a network and a camera-equipped wireless client device;
means for enabling determination of a particular point of view within a local three-dimensional map of visual features, that corresponds to a collection of visual features, obtained from a visual image captured by the camera-equipped wireless client device, to localize the camera-equipped wireless client device, within a physical area covered, for wireless access, by the wireless access point,
wherein the local, three-dimensional map of visual features is a map associated with a physical area covered, for wireless access, by the wireless access point.

According to various, but not necessarily all, embodiments there is provided examples as claimed in the appended claims.

### BRIEF DESCRIPTION

Some examples will now be described with reference to the accompanying drawings in which:
FIG. 1 shows an example of the subject matter described herein;
FIG. 2 shows another example of the subject matter described herein;
FIG. 3 shows another example of the subject matter described herein;
FIG. 4 shows another example of the subject matter described herein;
FIG. 5 shows another example of the subject matter described herein;
FIG. 6 shows another example of the subject matter described herein;
FIG. 7 shows another example of the subject matter described herein;
FIG. 8 shows another example of the subject matter described herein;
FIG. 9 shows another example of the subject matter described herein;
FIG. 10 shows another example of the subject matter described herein;
FIG. 11 shows another example of the subject matter described herein;
FIG. 12 shows another example of the subject matter described herein.

### DETAILED DESCRIPTION

Computer vision enables a computer to process an image of a real-world location captured from a particular point of view (a particular location and a particular orientation) and determine the particular point of view from which the image was captured. This determination of the point of view is often called localizing or localization.

The process determines a particular point of view, within a three-dimensional map of visual features, that corresponds to a collection of visual features, obtained from a visual image captured by a device, to localize the device

A putative point of view within the three-dimensional map of visual features, is associated, through a projective geometry transformation, with a putative 2D image of the three-dimensional arrangement of real-world visual features defined by the three-dimensional map of visual features. The process searches through putative points of view to find a putative 2D image that matches the collection of visual features, obtained from the visual image captured by the device. The point of view associated with the best-matching putative 2D image is the most likely point of view of the device when it was capturing the visual image.

Thus, given a three-dimensional map of visual features and a 2D image of visual features from an unknown point of view, there is a transformation that determines the point of view at which a putative 2D image of the visual features of the three-dimensional map, from a putative point of view, matches the actual 2D image of visual features.

There are currently many different approaches to the above-described process that use computer vision to determine a point of view and localize a device.

The cost of these processes can be high because the search of the three-dimensional map of visual features is processing-intensive.

A sparse three-dimensional map of visual features can be used.

However, as described below and as illustrated in the FIGs, the cost of these processes can be further or alternatively reduced when the device to be located is a camera-equipped wireless client device 60.

The camera-equipped wireless client device 60 can communicate wirelessly with a wireless access point 50, and the point of view of the camera-equipped wireless client device 60 can be determined within a local three-dimensional map 30 of visual features 34 that is 'local' in that it is associated with a physical region 54 covered, for wireless access, by the wireless access point 50. As the three-dimensional map 30 of visual features 34 is size constrained by the coverage, for wireless access, by the wireless access point 50 the processing, memory and communication costs can be reduced.

The following examples relate to an apparatus, which can be a camera-equipped wireless client device 60 or can be a wireless access point 50.

The apparatus 52, 60 comprises: means for enabling communication between a wireless access point 50 to a network 70 and a camera-equipped wireless client device 60; and means for enabling determination of a particular point of view 32 within a local three-dimensional map 30 of visual features, that corresponds to a collection of visual features 20, obtained from a visual image 10 captured by the camera-equipped wireless client device 60, to localize the camera-equipped wireless client device 60, within a physical region 54 covered, for wireless access, by the wireless access point 50, wherein the local, three-dimensional map 30 of visual features is a map associated with the physical region 54 covered, for wireless access, by the wireless access point 50.

The particular point of view 32 with the local three-dimensional map 30 of visual features 34 produces, through a projective geometry transformation, a two-dimensional arrangement of visual features 34 that matches the collection of visual features 20, obtained from the visual image 10 captured by a camera-equipped wireless client device 60. In this way, the particular point of view 32 corresponds to the collection of visual features 20 obtained from the visual image 10.

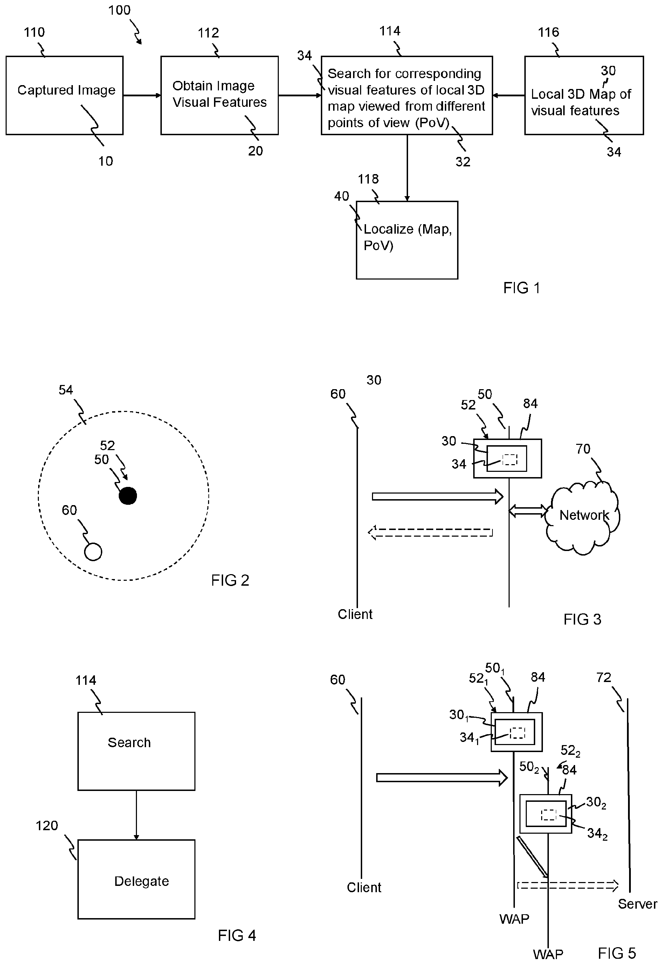

FIG 1 illustrates a method 100 for determining a particular point of view 32 within a local three-dimensional map 30 of visual features, to localize the camera-equipped wireless client device 60.

At block 110, a visual image 10 is captured by the camera-equipped wireless client device 60.

At block 112, a collection of visual features 20 is obtained, from the visual image 10 captured by the camera-equipped wireless client device 60. Various different feature extraction algorithms can be used to obtain the collection of visual features 20 from the visual image 10. Examples of extraction algorithms include, but are not limited to: histograms of local gradients, scale-invariant feature transform (SIFT), machine learning approaches, self supervised interest point detection, SuperPoint, R2D2 features, etc.

At block 116, a local, three-dimensional map 30 of visual features is accessed. The local, three-dimensional map 30 of visual features is associated with the physical region 54 covered, for wireless access, by the wireless access point 50.

At block 114, the method 100 determines a particular point of view 32 (location and orientation) within the local three-dimensional map 30 of visual features, that corresponds to the collection of visual features 20, obtained from a visual image 10 captured by the camera-equipped wireless client device 60, to localize the camera-equipped wireless client device 60, within the physical region 54 covered, for wireless access, by the wireless access point 50.

At block 118, the method 100 localizes the camera-equipped wireless client device 60, based on the local three-dimensional map 30 and the point of view (location and orientation) within the local three-dimensional map 30.

The apparatus 52, 60 comprises: means for enabling communication between a wireless access point 50 to a network 70 and a camera-equipped wireless client device 60 to enable performance of the method 100.

The wireless access point 50 can be configured to provide radio access to the network 70. It can, for example, be a Wi-Fi access point or a radio access network node, for example a base station of a cellular communications network.

The camera-equipped wireless client device 60 can, for example, be a mobile device such as, for example, a robot, a car, a mobile phone, a personal electronic device, smart glasses, head-up display etc.

The visual image 10 is captured by a camera at (or in communication with) the camera-equipped wireless client device 60.

The feature extraction at block 112 can be performed by the camera-equipped wireless client device 60 or the wireless access point 50. If the feature extraction is performed at the wireless access point 50, then the image 10 or information dependent upon the image 10 can be communicated wirelessly from the camera-equipped wireless client device 60 to the wireless access point 50. If the feature extraction is performed at the camera-equipped wireless client device 60, then the collection of visual features 20 can be communicated wirelessly from the camera-equipped wireless client device 60 to the wireless access point 50.

The storage and/or provision of the local three-dimensional map 30 can be performed by the wireless access point 50 and/or by the camera-equipped wireless client device 60, or in the direct vicinity of the wireless access point 50, within the network (far edge cloud) but still within or close to the served area.

Determining a particular point of view 32 within the local three-dimensional map 30 of visual features 34 can be performed by the wireless access point 50 and/or by the camera-equipped wireless client device 60.

If the determining 114 is performed at the wireless access point 50, then the wireless access point 50 needs access to the local three-dimensional map 30 and the collection of image features 20 obtained from the captured image 10.

If the determining 114 is performed at the camera-equipped wireless client device 60, then the camera-equipped wireless client device 60 needs access to the local three-dimensional map 30 and the collection of image features 20 obtained from the captured image 10.

Information localizing the camera-equipped wireless client device 60, determined by the method 100, can be provided to the camera-equipped wireless client device 60 and/or to the network 70.

Localizing the camera-equipped wireless client device 60 can for example comprise determining a position (point of view 32) defined by six-degrees of freedom (6DoF). This includes a three-dimensional location and a three-dimensional orientation.

### Maps

A three-dimensional map 30 of visual features 34 at least maps visual features 34 to three-dimensional locations. The collective of located visual features 34 forms the three-dimensional map 30 of visual features 34.

In some examples, the three-dimensional map 30 of visual features 34 comprises a three-dimensional coordinate associated with one or more vectors that describe the appearance of the visual feature 34 from one or more points of view.

In some examples, the three-dimensional map 30 of visual features 34 comprises scale-invariant feature transform (SIFT) keypoints, SIFT descriptors and the three-dimensional coordinates of the keypoints.

The three-dimensional map 30 of visual features 34 can be estimated from multiple images captured from different points of view. The estimation can happen on the client device 60 or in the wireless access point 60 or network 70.

The located visual features 34 can be simply encoded as a feature description (e.g. SIFT keypoint and descriptors) and a three-dimensional location. In other examples, the visual features 34 can be encoded at meta-levels higher than a feature level, for example as an anchor. An anchor is a set of visual features 34, in three-dimensions, that together can be uniquely identified across different sessions. Conceptually, an anchor enables a persistent link to a specific physical location and can be used to link to a specific physical location with digital content. In some examples, the visual features 34 can be encoded within parameters specifying a trained neural network or other machine learning algorithm. The three-dimensional map 30 of visual features 34 can therefore take many different forms. However, irrespective of form a three-dimensional map 30 of visual features 34 enables recognition of three-dimensional distributions of visual features 34 from different perspectives.

Three-dimensional maps 30 of visual features 34 can be sparse. For example, the mapped visual features 34 can be sparsely distributed, for example, being associated only with cornerpoints (e.g. SIFT keypoints). The majority of a sparse three-dimensional map 30 of visual features 34 is empty. The density of the visual features 34 in a sparse map is such that the full 3D geometry is efficiently encoded but not visible to the human eye.

### Search

At block 114, the method 100 determines a particular point of view 32 within the local three-dimensional map 30 of visual features, that corresponds to the collection of visual features 20, obtained from a visual image 10 captured by the camera-equipped wireless client device 60.

The geometry camera-equipped wireless client device 60 is localized within the physical region 54 covered, for wireless access, by the wireless access point 50.

This can be achieved by searching 114 one or more local, three-dimensional maps 30 of visual features 34 to find the collection of visual features 34 observed from a particular point of view 32 within a particular local map 30 that transform to a collection of visual features 20. The visual features 20 are obtained from a visual image 10 captured by a camera-equipped wireless client device 60. The search 114, when successful, localizes 40 the camera-equipped wireless client device 60, within the physical region 54 covered for wireless access by the wireless access point 50 and associated with the particular local map 30, in dependence upon the particular point of view 32 within the particular map 30.

FIG 2 illustrates an example of an apparatus 52 comprising a wireless access point 50. The physical region 54 is covered for wireless access by the wireless access point 50. The physical region 54 can be defined, for example, as an area or a volume.

The one or more local, three-dimensional maps 30 of visual features 34 are local maps 30 associated with one or more physical regions 54 covered, for wireless access, by the wireless access point 50.

In at least some examples, for example as illustrated in FIG 3, the apparatus 52 comprises the wireless access point 50 to the network 70, wherein the wireless access point 50 is configured to communicate wirelessly with one or more camera-equipped wireless client devices 60; and the apparatus 52 comprises means for determining a particular point of view 32 within a local three-dimensional map 30 of visual features 34, that corresponds to a collection of visual features 20, obtained from a visual image 10 captured by a camera-equipped wireless client device 60, to localize 40 the camera-equipped wireless client device 60, within the physical region 54 covered, for wireless access, by the wireless access point 50, wherein the local, three-dimensional map 30 of visual features 34 is a map associated with a physical region 54 covered, for wireless access, by the wireless access point 50.

In some examples the apparatus comprising the wireless access point 50 additionally comprises a memory storing information that encodes one or more local, three-dimensional maps 30 of visual features 34. The memory can, for example, store one or more local, three-dimensional maps 30 of visual features 34. The one or more local, three-dimensional maps 30 of visual features 34 are local maps 30 associated with one or more physical regions 54 covered, for wireless access, by the wireless access point 50. There is therefore 'edge' storage of local, three-dimensional maps 30 of visual features 34.

The apparatus 52 is configured to search 114 the one or more local, three-dimensional maps 30 of visual features 34 to find a collection of visual features observed from a particular point of view 32 within a particular local map that transform to a collection of visual features 20, obtained from a visual image 10 captured by a camera-equipped wireless client device 60, to localize 40 the camera-equipped wireless client device 60, within the physical region 54 covered for wireless access by the wireless access point 50 and associated with the particular local map, in dependence upon the particular point of view 32 within the particular map.

In some examples, there is location-dependent access to the network 70 via the wireless access point 50. Access-grant requires at least a physical presence of the camera-equipped wireless client device 60 within the physical region 54 covered, for wireless access, by the wireless access point 50. The location-dependent access-grant to the network 70 via the wireless access point 50 by the camera-equipped wireless client device 60 can be automatic and automatically grant access, at the apparatus 52, to the local, three-dimensional map 30 of visual features 34 for localizing the camera-equipped wireless client device 60. Access-denial can, for example occur, without a physical presence of the camera-equipped wireless client device 60 within the physical region 54 covered, for wireless access, by the wireless access point 50.

The location-dependent access to the network 70 via the wireless access point 50 can be secured access that is dependent upon an authentication process. Thus, access to the network 70 via the wireless access point 50 requires authentication and physical presence.

Authentication can, for example, be password based (e.g. Wi-Fi), smart card/SIM based (e.g. 3GPP) or biometric based.

Access can be closed access in that access to one wireless access point 50 does not necessarily give access to other different access points 50 whether at the same apparatus 52 or a different apparatus 52. Thus, access to one store of three-dimensional maps 30 of visual features 34 at a wireless access point 50 does not necessarily give access to other stores of three-dimensional maps 30 of visual features 34 at other different access points 50.

In some examples, for example as illustrated in FIG 4, the apparatus 52 is configured to delegate 120 the task of determining a particular point of view 32 within a local three-dimensional map 30 of visual features 34, that corresponds to a collection of visual features 20, obtained from the visual image 10 captured by the camera-equipped wireless client device 60.

In the following similar features will be referenced using the same reference e.g. 52 for the apparatus comprising the wireless access point, and, where appropriate for clarity, different sub-script indices are used to differentiate different examples of the features e.g. 52₁, 52₂, 52ᵢ etc for different instances of the apparatus 52.

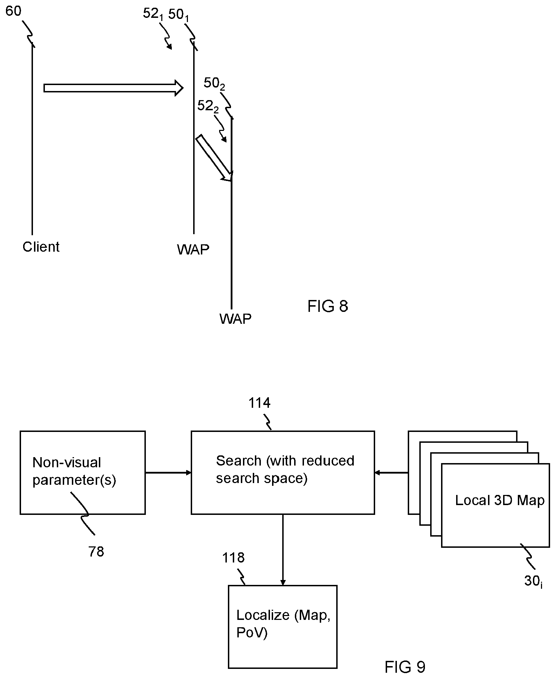

In some examples, for example as illustrated in FIG 5 & 8, the apparatus 52₁ comprising the access point 50₁ delegates 120 the task to another apparatus, for example, the apparatus 52₂ comprising the access point 50₂ or to the server 72. In some examples, the apparatus 52₁ can delegate 120 the task to only the apparatus 52₂. In some examples, the apparatus 52₁ can delegate 120 the task to only the server 72. In some examples, the apparatus 52₁ can selectively delegate 120 the task to the apparatus 52₂ or the server 72.

The another apparatus 52₂ is distinct and separate from the apparatus 52₁. The another wireless access point 50₂ is distinct and separate from the wireless access point 50₁.

FIG 5 illustrates an example of a system comprising the apparatus 52₁, a central server 70, and one or more additional apparatus 52ᵢ. In the illustrated example, there is one additional apparatus 52₂.

Each additional apparatus 52ᵢ comprises: at least one additional wireless access point 50ᵢ configured to communicate wirelessly with one or more camera-equipped wireless client devices 60; and means for determining a particular point of view 32 within a local three-dimensional map 30ᵢ of visual features 34ᵢ, that corresponds to a collection of visual features 20, obtained from a visual image 10 captured by a camera-equipped wireless client device 60, to localize 40 the camera-equipped wireless client device 60, within the physical region 54ᵢ covered, for wireless access, by the additional wireless access point 50ᵢ, wherein the local, three-dimensional map 30ᵢ of visual features 34ᵢ is a map associated with a physical region 54ᵢ covered, for wireless access, by the additional wireless access point 50ᵢ.

The additional apparatus 52ᵢ can comprise a memory 84 that stores information dependent upon one or more local, three-dimensional maps 30ᵢ of visual features 34ᵢ, wherein the one or more local, three-dimensional maps 30ᵢ of visual features 34ᵢ are local maps 30 associated with one or more physical regions 54ᵢ covered, for wireless access, by the wireless access point 50ᵢ. In at least some examples, the memory 84 stores the one or more local, three-dimensional maps 30ᵢ of visual features 34ᵢ.

As illustrated in FIG 5, the In this situation, the apparatus 52₁ delegates 120 the task of determining a particular point of view 32 within a local three-dimensional map 30 of visual features 34, that corresponds to a collection of visual features 20, obtained from the visual image 10 captured by the camera-equipped wireless client device 60, to localize 40 the camera-equipped wireless client device 60, within a physical region 54 covered, for wireless access, by another wireless access point 50₂. The local, three-dimensional map 30 of visual features 34 is a map associated with a physical region 54 covered, for wireless access, by the another wireless access point 50₂.

The delegation 120 can, for example occur if localizing the camera-equipped wireless client device 60 based on the local three-dimensional map 30 associated with the physical region 54 covered for wireless access by the wireless access point 50₁ of the apparatus 52₁, is unsuccessful.
Delegation can also occur for pre-caching, and for preparation of a neighbor wireless access point 50. For example, delegation can occur as a precursor to or as part of a handover from a current wireless access point to another wireless access point. For example, delegation can occur in dependence upon movement of the camera-equipped wireless client device 60.

Here and elsewhere, localization can be unsuccessful is, for example, localization fails or if localization has an accuracy below a threshold accuracy.

In some examples, for example as illustrated in FIG 8 the system is configured as a peer-to-peer network without a central server. The delegation 120 can, for example occur if localizing the camera-equipped wireless client device 60 based on the local three-dimensional map associated with the physical region 54 covered for wireless access by the wireless access point 50₁ of the apparatus 52₁, is unsuccessful. In this situation, the apparatus 52₁ delegates 120 to another apparatus 52₂ in a peer-to-peer network of wireless access points 50, the task of determining a particular point of view 32 within a local three-dimensional map 30 of visual features 34, that corresponds to a collection of visual features 20, obtained from the visual image 10 captured by the camera-equipped wireless client device 60, to localize 40 the camera-equipped wireless client device 60, within a physical region 54 covered, for wireless access, by a wireless access point 50 of the another apparatus 52₂. The local, three-dimensional map 30 of visual features 34 is a map 30₂ associated with a physical region 54₂ covered, for wireless access, by the wireless access point 50₂ of another apparatus 52₂. The delegation 210 can, for example, delegate to another corresponding apparatus 52₂ in the peer-to-peer network the search 114 to find a collection of visual features 34₂ observed from a particular point of view 32 within a particular map 30₂.

In some examples, the another wireless access point 50 is selected based on a current or expected future location of the camera-equipped wireless client device 60.

In some examples, the local, three-dimensional map 30 used for localization is based on a current or expected future location of the camera-equipped wireless client device 60.

The physical area covered, for wireless access, by the another wireless access point can determine the local, three-dimensional map of visual features used for the delegated task.

### Privacy controls

In some examples, a three-dimensional maps 30ᵢ of visual features 34ᵢ is associated with privacy controls. For example, the three-dimensional maps 30ᵢ can comprise or be associated with metadata that controls creation/distribution/access of the map 30ᵢ.

In some examples, a three-dimensional map 30ᵢ of visual features 34ᵢ is only accessible by a camera-equipped wireless client devices 60 that is inside the region 34ᵢ associated with the wireless range (region 54ᵢ) associated with the wireless access point 50ᵢ that (exclusively) accesses/stores that three-dimensional map 30ᵢ.

In some examples, a three-dimensional maps 30ᵢ of visual features 34ᵢ is only accessible by a camera-equipped wireless client devices 60 that has been securely authenticated by the wireless access point 50_{i.} Authentication enables creation/distribution/access in relation to a map 30ᵢ on a permissions basis that is based on the authenticated identity of the camera-equipped wireless client device 60 that captures the image 10 or a user of the camera-equipped wireless client devices 60 that captures the image 10.

In some examples, a three-dimensional map 30ᵢ of visual features 34ᵢ is only accessible by a camera-equipped wireless client devices 60 that is inside the region 34ᵢ associated with the wireless range associated with the wireless access point that accesses/stored that three-dimensional maps 30ᵢ and that has been securely authenticated by the wireless access point 50ᵢ. Authentication enables creation/distribution/access in relation to a map 30ᵢ on a permissions basis that is based on the authenticated identity of the camera-equipped wireless client device 60 that captures the image 10 or a user of the camera-equipped wireless client devices 60 that captures the image 10.

In some examples, a three-dimensional map 30ᵢ of visual features 34ᵢ can be created, modified, merged and/or maintained at the central server 72 where more computational power is available. There can be active (non-transparent) transfer of data between central and local instances.

In some examples, communication of three-dimensional map 30ᵢ of visual features 34ᵢ associated with wireless access points 50ᵢ to a neighboring wireless access point 50ⱼ associated with a three-dimensional map 30ⱼ of visual features 34_{j,} allows the wireless access point 50ⱼ to determine overlap between the three-dimensional maps 30ᵢ, 30ⱼ. This allows the wireless access point 50ⱼ to locate itself relative to other wireless access points 50_{i.} This can also allow the wireless access point 50ⱼ to identify wireless access point 50ⱼ that are candidates for delegation 120.

In some examples, communication of three-dimensional map 30ᵢ of visual features 34ᵢ associated with wireless access points 50ᵢ to a wireless access point 50ₖ associated with a three-dimensional map 30ₖ of visual features 34ₖ, at a higher hierarchical level allows the wireless access point 50ₖ to stitch together three-dimensional map 30ᵢ, 30ₖ (subject to privacy constraints). This allows the wireless access point 50ₖ to improve and augment its three-dimensional map 30ₖ.

However, as three-dimensional maps 30 are only relevant and accessible in a specific region 54, they are preferably stored for access at the wireless access point 50 serving the region 54. This reduces communication and latency and improves privacy and security (it requires a physical presence of the camera-equipped wireless client devices 60 within the region 54).

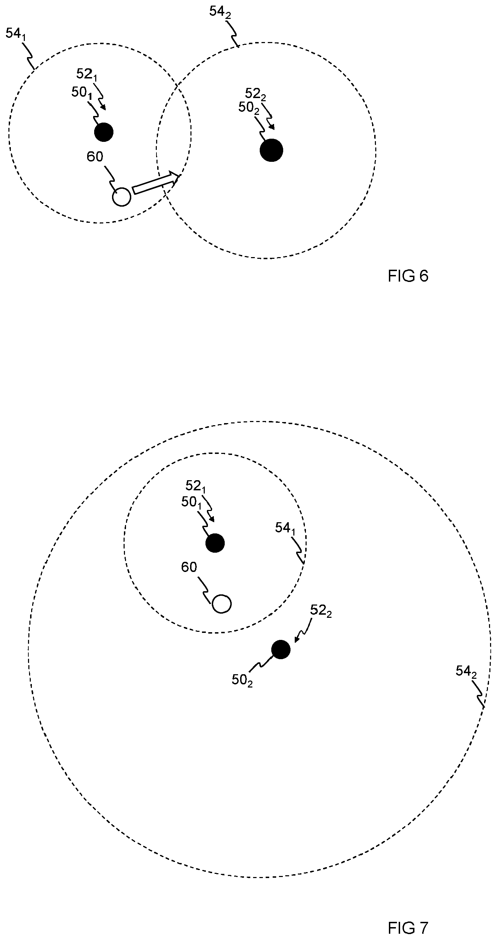

FIGs 6 and 7 illustrate examples of arrangements comprising the apparatus 52₁ and the another apparatus 52₂.

The apparatus 52₁ comprises the wireless access point 50₁. The physical region 54₁ is covered for wireless access by the wireless access point 50₁. The physical region 54₁ can be defined, for example, as an area or a volume. As described above, the wireless access point 50₁ can use, and can also store, one or more local, three-dimensional maps 30 of visual features 34 that are local maps associated with the physical region 54₁ covered, for wireless access, by the wireless access point 50₁.

The apparatus 52₂ comprises the wireless access point 50₂. The physical region 54₂ is covered for wireless access by the wireless access point 50₂. The physical region 54₁ can defined, for example, as an area or a volume. As described above, the wireless access point 50₁ can use, and can also store, one or more local, three-dimensional maps of visual features that are local maps associated with the physical region 54₂ covered, for wireless access, by the wireless access point 50₂.

In the examples illustrated the physical region 54₁ and the physical region 54₂ at least partially overlap. In FIG 6 there is a partial intersection of the another physical region 54₁ and the physical region 54₂. The physical region 54₁ and the physical region 54₂ share a common region. The physical region 54₁ has a region outside the common region. The physical region 54₂ has a region outside the common region. In FIG 7 the physical region 54₁ is a sub-region of the physical region 54₂. The physical region 54₁ and the physical region 54₂ share a common region which is co-terminus with the physical region 54₁. The physical region 54₁ has no region outside the common region. The physical region 54₂ has a region outside the common region.

In the examples illustrated in FIGs 5 and 6, the wireless access point 50₁ and the wireless access point 50₂ are comprised in different apparatus 52₁. However, in other examples the wireless access point 50₁ and the wireless access point 50₂ can be comprised in the same apparatus 52.

In at least some examples, a process is provided to allow a wireless access point 50₁ to discover another wireless access point 50₂.

In at least some examples, a process is provided to allow an apparatus 52₁ comprising a wireless access point 50₁ to discover another apparatus 52₂ comprising a wireless access point 50₂.

The apparatus 52₁ can for example be configured to discover the another apparatus 52₂ using a discovery process that is based on one or more of:
(i) the another apparatus 52₂ is a nearest neighbor to the apparatus 52₁;
(ii) the apparatus 52₁ stores at least one three-dimensional map 30₁ of visual features 34₁ that at least partially overlaps at least one three-dimensional map 30₂ of visual features 34₂ stored at the another apparatus 52₂:
(iii) the another apparatus 52₂ has at least one three-dimensional map 30₂ of visual features 34₂ that has been formed by stitching together three-dimensional maps 30ᵢ of visual features 34ᵢ obtained from other apparatuses 52ᵢ:
(iv) the another apparatus 52₂ has a coverage range for wireless access point 50₂ (coverage region 52₂) that is larger than and that at least partially includes a coverage range for wireless access point 50₁ (coverage region 52₁) of the apparatus 52₁;
(v) the another apparatus 52₂ has a larger database of three-dimensional maps 30₂ of visual features 34₂ than the apparatus 52₁;
(vi) the another apparatus 52₂ is an expected nearest apparatus 52 based on predicted movement of the apparatus 52₁.

The wireless access point 50₁ can, for example, be configured to discover the another wireless access point 50₂ using a discovery process that is based on one or more of:
(i) the another wireless access point 50₂ is a nearest neighbor to the wireless access point 50₁;
(ii) the wireless access point 50₁ stores at least one three-dimensional map 30₁ of visual features 34₁ that at least partially overlaps at least one three-dimensional map 30₂ of visual features 34₂ stored at the another wireless access point 50₂:
(iii) the another wireless access point 50₂ has at least one three-dimensional map 30₂ of visual features 34₂ that has been formed by stitching together three-dimensional maps 30ᵢ of visual features 34ᵢ obtained from other wireless access points 50ᵢ:
(iv) the another wireless access point 50₂ has a coverage range (coverage region 52₂) that is larger than and that at least partially includes a coverage range for wireless access point 50₁ (coverage region 52₁);
(v) the another wireless access point 50₂ has a larger database of three-dimensional maps 30₂ of visual features 34₂ than the apparatus 52₁.

It will be appreciated that there can be a hierarchy to three-dimensional maps 30 of visual features 34 based, for example, on a size of the region covered. The discovery process can move up that hierarchy stage-by-stage. If the search is unsuccessful at one stage in the hierarchy, the process moves up the hierarchy to the next stage. Thus, the discovery process can move up that hierarchy stage-by-stage from most local and smallest region (e.g. home or immediate vicinity) to next most local and next smallest region (e.g. street or close vicinity) and further to next most local and next smallest region (e.g. neighborhood) etc.

The apparatus 52 can be configured, if localizing the camera-equipped wireless client device 60 based on the local three-dimensional map associated with the physical region 54 covered for wireless access by the wireless access point 50 is unsuccessful to delegate to another wireless access point 50₂ the task of determining a particular point of view 32 within a local three-dimensional map 30 of visual features 34, that corresponds to a collection of visual features 20, obtained from the visual image 10 captured by the camera-equipped wireless client device 60, to localize 40 the camera-equipped wireless client device 60, within a physical region 54 covered, for wireless access, by the another wireless access point 50₂. The local, three-dimensional map 30₂ of visual features 34₂ is a map associated with a physical region 54₂ covered, for wireless access, by the another wireless access point 50₂. The wireless access point 50₁ and the another wireless access point 50₂ can, for example, use different access protocols and/or cover different physical regions 54₁, 54₂. For example, one of the wireless access points 50₁, 50₂ can be a Wi-Fi access point and the other of the wireless access point 50₁, 50₂ can be a 3GPP access point, for example a base station.

In FIG 7, in some but not necessarily all examples, the smaller physical region 54₁ can, for example represent a coverage region for a WiFi wireless access point (or for an access point for a relatively shorter- range wireless access protocol) and the physical region 54₂ can, for example, represent a coverage region for a cellular base station e.g. gNB (or for an access point of another longer-range wireless access protocol).

One possible way for the spatial service to be discovered in case of Wi-Fi is by the PAD mechanism, proposed in 802.11aq. The 802.11aq-enabled client device 60 searches for specific PAD messages in the Wi-Fi access points 50 in the neighborhood. Once those are detected and the credentials are known, the client device 60 can attach to the particular Wi-Fi access point 50 to receive locally enhanced service or inform a current Wi-Fi access point 50 about the existence of an another Wi-Fi access point 50 for service delegation. If the client device 60 and/or the Wi-Fi access point 50 does not have 802.11aq capabilities, the service execution can still be enhanced, but it is not known at the time of attachment to the Wi-Fi access point 50 whether the service is available or not, because it is not advertised via the PAD mechanism.

In case of 5G, as there is no discovery phase, the queries are served either from the central server 72, or from an optimal mobile edge computing (MEC) endpoint storing relevant content.

In some examples, where there is a central server 72, the service is delivered from the central server 72 as a second step and only if the local service at the wireless access point 50 is not able to deliver results with high enough accuracy.

In some examples, the another wireless access point 50 is selected based on a current or expected future location of the camera-equipped wireless client device 60

The physical area covered, for wireless access, by the selected wireless access point can determines the local, three-dimensional map of visual features used for the delegated task.

The delegation can therefore enable the search 114 to find a collection of visual features observed from a particular point of view 32 within a particular stored map 30 that correspond to a collection of visual features 20, obtained from a visual image 10 captured by a camera-equipped wireless client device 60 at or near the current or expected future location of the camera-equipped wireless client device 60. The particular stored map 30 used for the search is selected based on the current or expected future location of the camera-equipped wireless client device 60.

In at least some examples, wireless access points 50 are aware of their coverage regions 54 and they can detect if the camera-equipped wireless client device 60 is moving at or towards the perimeter of the coverage region 54 and can talk to a neighboring wireless access point 50 to get prepared. In some examples, the perimeter current wireless access point 50₂ can inform the new wireless access point 50₂ where (a location) the camera-equipped wireless client device 60 will enter the region 54₂ covered by the wireless access point 50₂. This enables very quick handover of localization between wireless access points 50.FIG 6 illustrates an example of such a moving camera-equipped wireless client device 60.

### Search-space reduction

In at least some examples, it is desirable to reduce a search space used by the search 114 to find a collection of visual features observed from a particular point of view 32 within a particular map that correspond to a collection of visual features 20, obtained from a visual image 10 captured by a camera-equipped wireless client device 60. The reduction in the search space can, for example, be based upon one or more non-visual parameters that vary with location and/or orientation of the camera-equipped wireless client device 60.

Referring to FIG 9, at block 116, one or more local, three-dimensional maps 30 of visual features 34 is accessed. The local, three-dimensional maps 30 of visual features 34 are associated with respective the physical regions 54 covered, for wireless access, by the wireless access point 50.

At block 114, the method determines a particular point of view 32 within the local three-dimensional map 30 of visual features, that corresponds to the collection of visual features 20, obtained from a visual image 10 captured by the camera-equipped wireless client device 60, to localize the camera-equipped wireless client device 60, within the physical region 54 covered, for wireless access, by the wireless access point 50. A search 114 is used to find a collection of visual features observed from a particular point of view 32 within a particular one of the one or more maps 30 that correspond to a collection of visual features 20, obtained from a visual image 10 captured by a camera-equipped wireless client device 60.

At block 118, the method localizes the camera-equipped wireless client device 60, based on the local three-dimensional map 30 and the point of view (location and orientation) within the local three-dimensional map 30.

At block 114, the method receives non-visual parameters 78. The one or more non-visual parameters reduce a search space. For example, they reduce the number of maps 30 that are searched or constrain which parts of which maps 30 are searched.

The non-visual parameters 78 can, for example, vary with location and/or orientation of the camera-equipped wireless client device 60.

The non-visual parameters 78 can, for example, be received from the camera-equipped wireless client device 60.

The one or more non-visual parameters 78 can be determined contemporaneously with capturing of the visual image 10.

The non-visual parameters 78 are preferably parameters that are effective at reducing a search space. They effectively help discriminate between similar groups of visual features.

For example, different groups of visual features 34 can be associated with different distinctive sets of non-visual parameters. In some examples, different groups of visual features 34 can be associated with different distinctive sets of non-visual parameters that are dependent upon locations and/or orientations that discriminate the groups of visual features.

The non-visual parameters 78 can be radio parameters and/or locations (e.g. Global Navigation Satellite System (GNSS) for example Global Positioning System (GPS), any other measure related to coarse location)

Using non-visual parameters 78 based on location allows the search space to be adapted based on current position and, optionally, predicted movement of the camera-equipped wireless client device 60.

Examples of radio parameters include Wi-Fi SSID, Cell ID with or without signal measurements. Suitable signal measurements can, for example, be Received Signal Strength Indicator (RSSI), reference signal received power (RSRP), reference signal received quality (RSRQ), Global Navigation Satellite System (GNSS) for example Global Positioning System (GPS) etc

In some examples, the local, three-dimensional map 30 used for localization is based on a current or expected future location of the camera-equipped wireless client device 60. For example, portions of a

As an example, if transmissions from a base station in cell 1 are seen with -35 dbm and transmissions from a base station in cell 2 are seen with -43 dbm, all features annotated with an RSSI range of cell 1 between [-40 dbm, -30 dbm] and all features annotated with an RSSI range of cell 2 between [-40 dbm, -50 dbm] are used for the search.

### Client

In the preceding examples, the camera-equipped wireless client device 60 can receive or store an authentication credential for enabling access to the localization service provided via a wireless access point 50. Access to the localization service then requires a physical presence of the camera-equipped wireless client device 60 in the region 54 covered by the wireless access point 50.

In the preceding examples, the camera-equipped wireless client device 60 can control aspects of a delegated search 114. For example, the camera-equipped wireless client device 60 can be configured to control a geographic range of delegation for a delegated search 114. In some examples, the camera-equipped wireless client device 60 is configured to report to a current wireless access point 60 to enable determination of a nearest-neighbor wireless access point(s) 50. In some examples, the camera-equipped wireless client device 60 is configured to report information that enables location or movement tracking of the camera-equipped wireless client device 60 by a wireless access point 60. The reported information can, for example, comprise a last-updated position (point of view 32) of the camera-equipped wireless client device 60. The point of view can be defined by six-degrees of freedom (6DoF)- a three-dimensional location and a three-dimensional orientation.

In some examples, the camera-equipped wireless client device 60 can bridge between two wireless access points 50 before a handover from one wireless access point to another wireless access point.

In some examples, the camera-equipped wireless client device 60 can specific privacy settings, controls or permissions.

In some examples, the camera-equipped wireless client device 60 is configured to collect non-visual parameters for constraining the search 114, contemporaneously with capturing of the visual image 10. The non-visual parameters can be selectively quantized to make them non-discriminatory within a defined collection of points of view and discriminatory between different defined examples collections of points of view.

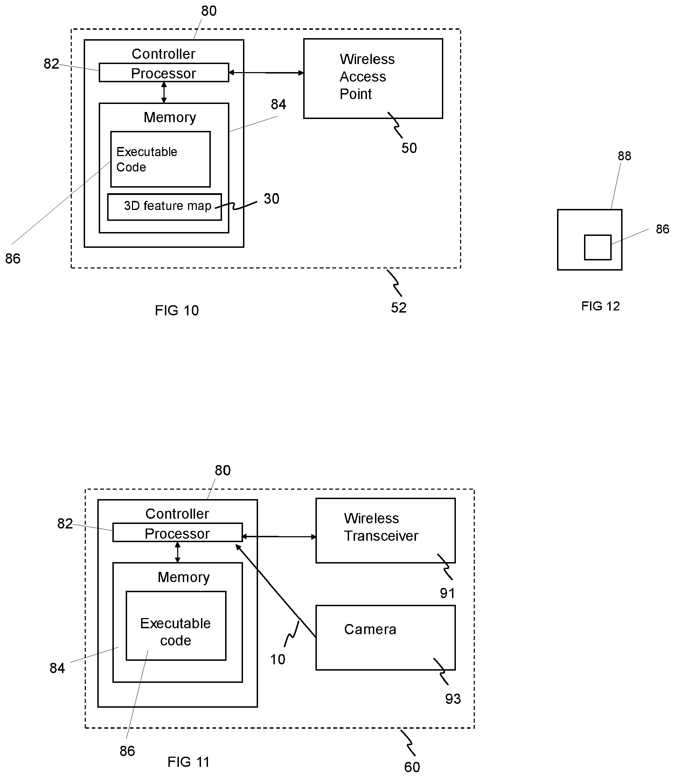

The camera-equipped wireless client device 60 can be comprised of multiple components. For example, the camera 93 (see FIG 11) could be separate to, but in communication with, the means for wirelessly communicating with a wireless access point 50. For example, camera-equipped wireless client device 60 could comprise a head mounted device (HUD, glasses) and a smartphone or similar.

In some examples, the camera-equipped wireless client device 60 is configured to indicate to the wireless access point 50 whether or not the camera-equipped wireless client device 60 has the capability for performing or helping with performance of the search 114 at the client device 60. If the search 114 is to be performed at the camera-equipped wireless client device 60, then the required maps 30 can be prefetched as previously described.

Other capabilities of the camera-equipped wireless client device 60 can be additionally or alternatively provided by the camera-equipped wireless client device 60 to the wireless access point 50, such as the capabilities described above.

FIG 10 illustrates an example of an apparatus 52 comprising at least one wireless access point 50 and a controller 80. FIG 11 illustrates an example of a camera-equipped wireless client device 60 comprising a camera 93, a wireless transceiver 91 for communicating with a wireless access point 50 and a controller 80.

Implementation of a controller 80 may be as controller circuitry. The controller 80 may be implemented in hardware alone, have certain aspects in software including firmware alone or can be a combination of hardware and software (including firmware).

A controller 80 may be implemented using instructions that enable hardware functionality, for example, by using executable instructions of a computer program 86 in a general-purpose or special-purpose processor 82 that may be stored on a computer readable storage medium (disk, memory etc) to be executed by such a processor 82.

The processor 82 is configured to read from and write to the memory 84. The processor 82 may also comprise an output interface via which data and/or commands are output by the processor 82 and an input interface via which data and/or commands are input to the processor 82.

The memory 84 stores a computer program 86 comprising computer program instructions (computer program code) that controls the operation of the controller 80 and the apparatus hosting the controller when loaded into the processor 82. The computer program instructions, of the computer program 86, provide the logic and routines that enables the host apparatus to perform the methods described above.

The processor 82 by reading the memory 84 is able to load and execute the computer program 86.

In the wireless access point enabled apparatus 52, the memory 84 stores a computer program 86 comprising computer program instructions (computer program code) that controls the operation of the wireless access point enabled apparatus 52 when loaded into the processor 82.

The apparatus 52 therefore comprises:
at least one processor 82; and
at least one memory 84 including computer program code
the at least one memory 84 and the computer program code 86 configured to, with the at least one processor 82, cause the apparatus 52 at least to perform:
   communication between a wireless access point 50 of the apparatus 52 and a camera-equipped wireless client device 60; and
   enabling determination of (or determining) a particular point of view 32 within a local three-dimensional map 30 of visual features 34, that corresponds to a collection of visual features 20, obtained from a visual image 10 captured by the camera-equipped wireless client device 60, to localize 40 the camera-equipped wireless client device 60, within a physical region 54 covered, for wireless access, by the wireless access point 50,
wherein the local, three-dimensional map 30 of visual features 34 is a map associated with a physical region 54 covered, for wireless access, by the wireless access point 50.

Computer program instructions 86 cause for causing an apparatus 52 to perform at least the following or for performing at least the following:
enabling determination of (or determining) a particular point of view 32 within a local three-dimensional map 30 of visual features 34, that corresponds to a collection of visual features 20, obtained from a visual image 10 captured by the camera-equipped wireless client device 60, to localize 40 the camera-equipped wireless client device 60, within a physical region 54 covered, for wireless access, by the wireless access point 50,
wherein the local, three-dimensional map 30 of visual features 34 is a map associated with a physical region 54 covered, for wireless access, by the wireless access point 50.

In the camera-equipped wireless client device 60, the memory 84 stores a computer program 86 comprising computer program instructions (computer program code) that controls the operation of the camera-equipped wireless client device 60 when loaded into the processor 82.

The apparatus 60 therefore comprises:
at least one processor 82; and
at least one memory 84 including computer program code
the at least one memory 84 and the computer program code configured to, with the at least one processor 82, cause the apparatus 60 at least to perform: communication between the apparatus 60 and a wireless access point 50;
enabling determination of (or determining) a particular point of view 32 within a local three-dimensional map 30 of visual features 34, that corresponds to a collection of visual features 20, obtained from a visual image 10 captured by the camera-equipped wireless client device 60, to localize 40 the camera-equipped wireless client device 60, within a physical region 54 covered, for wireless access, by the wireless access point 50,
wherein the local, three-dimensional map 30 of visual features 34 is a map associated with a physical region 54 covered, for wireless access, by the wireless access point 50.

Computer program instructions 86 cause for causing an apparatus 52 to perform at least the following or for performing at least the following:
enabling determination of (or determining) a particular point of view 32 within a local three-dimensional map 30 of visual features 34, that corresponds to a collection of visual features 20, obtained from a visual image 10 captured by the camera-equipped wireless client device 60, to localize 40 the camera-equipped wireless client device 60, within a physical region 54 covered, for wireless access, by the wireless access point 50, wherein the local, three-dimensional map 30 of visual features 34 is a map associated with a physical region 54 covered, for wireless access, by the wireless access point 50.

As illustrated in Fig 12, the computer program 86 may arrive at the apparatus 52, 60 via any suitable delivery mechanism 88. The delivery mechanism 88 may be, for example, a machine-readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 86. The delivery mechanism may be a signal configured to reliably transfer the computer program 86. The apparatus 52, 60 may propagate or transmit the computer program 86 as a computer data signal.

The computer program instructions may be comprised in a computer program, a non-transitory computer readable medium, a computer program product, a machine-readable medium. In some but not necessarily all examples, the computer program instructions may be distributed over more than one computer program.

Although the memory 84 is illustrated as a single component/circuitry it may be implemented as one or more separate components/circuitry some or all of which may be integrated/removable and/or may provide permanent/semi-permanent/ dynamic/cached storage.

Although the processor 82 is illustrated as a single component/circuitry it may be implemented as one or more separate components/circuitry some or all of which may be integrated/removable. The processor 82 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.
This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

### Maps

The previous examples, include example where the apparatus comprises means for enabling determination of a particular point of view within a local three-dimensional map of visual features, that corresponds to a collection of visual features, obtained from a visual image captured by the camera-equipped wireless client device, to localize the camera-equipped wireless client device, within a physical area covered, for wireless access, by the wireless access point,
wherein the local, three-dimensional map of visual features is a map associated with a physical area covered, for wireless access, by the wireless access point.

The three-dimensional map of visual features can take many different forms and can, for example, be encoded within a trained neural network or other machine learning algorithm or can be otherwise represented. However, irrespective of form, a three-dimensional map of visual features enables recognition of three-dimensional distributions of visual features from different perspectives.

The previous examples therefore also describe an apparatus comprising:
means for enabling communication between a wireless access point to a network and a camera-equipped wireless client device;
means for enabling determination of a particular point of view that corresponds to a visual image captured by the camera-equipped wireless client device, to localize the camera-equipped wireless client device, within a physical area covered, for wireless access, by the wireless access point, wherein the determination uses data corresponding to visual features (for example three-dimensional visual features or local, three-dimensional visual features) associated with the physical area covered, for wireless access, by the wireless access point.

In some examples, data is a local, three-dimensional map of visual features, the map being associated with a physical area covered, for wireless access, by the wireless access point. The local, three-dimensional map of visual features can explicitly specify visual features at different three-dimensional locations.

In some examples that data encodes knowledge of the local, three-dimensional visual features as learnt weights of a neural network or as other machine learning parameters. The data can for example comprise neural network weights corresponding to the local, three-dimensional visual features. Different neural networks can be associated with different physical areas covered, for wireless access, by different wireless access points. There can be a differently trained neural network for each wireless access point.
In some examples the data is dependent upon sets of local, two-dimensional visual features that correspond to views of the local, three-dimensional visual features from different points of view.

The blocks illustrated in the Figs may represent steps in a method and/or sections of code in the computer program 86. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

As used here 'module' refers to a unit or apparatus that excludes certain parts/components that would be added by an end manufacturer or a user.

The above-described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising:
means for enabling communication between a wireless access point to a network and a camera-equipped wireless client device; and
means for enabling determination of a particular point of view that corresponds to a visual image captured by the camera-equipped wireless client device, to localize the camera-equipped wireless client device, within a physical area covered, for wireless access, by the wireless access point,
wherein the determination uses data corresponding to visual features associated with the physical area covered, for wireless access, by the wireless access point.

2. An apparatus of claim 1 comprising:
means for enabling determination of a particular point of view within a local three-dimensional map of visual features, that corresponds to a collection of visual features, obtained from a visual image captured by the camera-equipped wireless client device, to localize the camera-equipped wireless client device, within a physical area covered, for wireless access, by the wireless access point,
wherein the local, three-dimensional map of visual features is a map associated with a physical area covered, for wireless access, by the wireless access point.

3. An apparatus of claim 1 or 2, comprising the wireless access point to the network, wherein the wireless access point is configured to communicate wirelessly with one or more camera-equipped wireless client devices; and comprises means for determining a particular point of view that corresponds to a visual image captured by a camera-equipped wireless client device, to localize the camera-equipped wireless client device, within the physical area covered, for wireless access, by the wireless access point, wherein the determination uses data corresponding to local, three-dimensional visual features associated with a physical area covered, for wireless access, by the wireless access point.

4. An apparatus of claim 2 or claim 3 when dependent upon claim 2, comprising:
a memory storing one or more three dimensional maps of visual features, wherein the one or more three-dimensional maps of visual features are local maps associated with one or more physical areas covered, for wireless access, by the wireless access point; and
means for enabling a search of the one or more local, three dimensional maps of visual features to find a collection of visual features observed from a particular point of view within a particular local map that transform to a collection of visual features, obtained from a visual image captured by a camera-equipped wireless client device, to localize the camera-equipped wireless client device, within the physical area covered for wireless access by the wireless access point and associated with the particular local map, in dependence upon the particular point of view within the particular map.

5. An apparatus of claim 4, configured to reduce a search space used by the search to find a collection of visual features observed from a particular point of view within a particular map that correspond to a collection of visual features, obtained from a visual image captured by a camera-equipped wireless client device, wherein the reduction of the search space is based upon one or more non-visual parameters that vary with location and/or orientation of the camera-equipped wireless client device.

6. An apparatus of claim 3, 4 or 5, wherein location-dependent access to the network via the wireless access point by the camera-equipped wireless client device automatically grants access, at the apparatus, to the local, three dimensional map of visual features for localizing the camera-equipped wireless client, wherein location-dependent access to the network via the wireless access point requires physical presence of the camera-equipped wireless client device within the physical area covered, for wireless access, by the wireless access point.

7. An apparatus of any of claims 3 to 6, when dependent upon claim 2, wherein the apparatus is configured, to delegate to another apparatus the task of determining a particular point of view within a local three-dimensional map of visual features, that corresponds to a collection of visual features, obtained from the visual image captured by the camera-equipped wireless client device, to localize the camera-equipped wireless client, within a physical area covered, for wireless access, by another wireless access point, wherein the local, three-dimensional map of visual features is a map associated with a physical area covered, for wireless access, by another wireless access point.

8. An apparatus of any of claims 3 to 7, when dependent upon claim 2, wherein the apparatus is configured to delegate to another access point the task of determining a particular point of view within a local three-dimensional map of visual features, that corresponds to a collection of visual features, obtained from the visual image captured by the camera-equipped wireless client device, to localize the camera-equipped wireless client device, within a physical area covered, for wireless access, by the another wireless access point, wherein the local, three-dimensional map of visual features is a map associated with a physical area covered, for wireless access, by the another wireless access point.

9. An apparatus of claim 8, wherein the wireless access point and the another wireless access point use different wireless access protocols and/or cover different physical areas.

10. An apparatus of claim 8 or 9, wherein delegation occurs, if localizing the camera-equipped wireless client device based on the local three-dimensional map associated with the physical area covered for wireless access by the wireless access point is unsuccessful, or wherein delegation occurs in dependence upon movement of the camera-equipped wireless client device wherein the another wireless access point is selected based on a current or expected future location of the camera-equipped wireless client device and the physical area covered, for wireless access, by the selected wireless access point determines the local, three-dimensional map of visual features used for the delegated task.

11. A system comprising the apparatus of any of claims 2 to 10, when dependent upon claim 2, a server, and one or more additional apparatus each additional apparatus comprising:
an additional wireless access point configured to communicate wirelessly with one or more camera-equipped wireless client devices; and means for determining a particular point of view within a local three-dimensional map of visual features, that corresponds to a collection of visual features, obtained from a visual image captured by a camera-equipped wireless client device, to localize the camera-equipped wireless client device, within the physical area covered, for wireless access, by the additional wireless access point, wherein the local, three-dimensional map of visual features is a map associated with a physical area covered, for wireless access, by the additional wireless access point.

12. A system of claim 11, wherein the apparatus is configured, if localizing the camera-equipped wireless client device based on the local three-dimensional map associated with the physical area covered for wireless access by the wireless access point is unsuccessful, to delegate to another apparatus in a peer-to-peer network the task of determining a particular point of view within a local three-dimensional map of visual features, that corresponds to a collection of visual features, obtained from the visual image captured by the camera-equipped wireless client device, to localize the camera-equipped wireless client device, within a physical area covered, for wireless access, by a wireless access point of the another apparatus, wherein the local, three-dimensional map of visual features is a map associated with a physical area covered, for wireless access, by the wireless access point of the another apparatus.

13. An apparatus of claim 1 or 2 configured as the camera-equipped wireless client device.

14. A computer program that, when run on a computer, performs:
enabling communication between a wireless access point to a network and a camera-equipped wireless client device; and
enabling determination of a particular point of view that corresponds to a visual image captured by the camera-equipped wireless client device, to localize the camera-equipped wireless client device, within a physical area covered, for wireless access, by the wireless access point,
wherein the determination uses data corresponding to visual features associated with the physical area covered, for wireless access, by the wireless access point.

15. A method comprising:
enabling communication between a wireless access point to a network and a camera-equipped wireless client device; and
enabling determination of a particular point of view that corresponds to a visual image captured by the camera-equipped wireless client device, to localize the camera-equipped wireless client device, within a physical area covered, for wireless access, within a coverage of the wireless access point,
wherein the determination uses data corresponding to visual features associated with the physical area covered, for wireless access, via the wireless access point.
